# EUROPEAN PATENT APPLICATION

(11) **EP 2 608 485 A1**
(43) Date of publication of application: **26.06.2013**
(21) Application number: 12195547.0
(22) Date of filing: 04.12.2012
(51) Int. Cl.: H04L 29/06, H04L 29/08, H04N 21/482, H04N 1/00

(54) **Method and device for transmitting and receiving information**

(30) Priority: 23.12.2011 KR 20110141733
(71) Applicant: Samsung Electronics Co., Ltd., Gyeonggi-do 443-742 (KR)
(72) Inventor: Park, Wan-je, Gyeonggi-do (KR); Kim, Ung, Seoul (KR)
(74) Representative: Davies, Robert Ean

(57) **Abstract**

A method of receiving information includes executing an external device link application on a device to be automatically connected to an external device, receiving summary information of information stored in the external device, displaying the received summary information, transmitting a request signal for at least one piece of information stored in the external device based on the displayed summary information to the external device, receiving information corresponding to the request signal from the external device, and storing the received information.

## Description

### CROSS-REFERENCE TO RELATED PATENT APPLICATIONS

This application claims the priority benefit of Korean Patent Application No. 10-2011-0141733, filed on December 23, 2011, in the Korean Intellectual Property Office, the disclosure of which is incorporated herein in its entirety by reference.

### BACKGROUND

Various embodiments relate to transmission and receiving of information, and more particularly, to a method and device for transmitting and receiving information for sharing information between devices.

With the rapid development of smart phone technologies, various technologies that share information between devices based on wireless communications have been suggested. Also, the range of devices capable of sharing information has been extended, for example, between smart phones, a smart phone and a tablet personal computer (PC), a smart phone and a television (TV), a smart phone and an audio system, a smart phone and a digital imaging device, and a tablet PC and a digital imaging device, etc.

Accordingly, a user's demand to share information according to a performance of a device increases. For example, in order to watch content captured by a digital imaging device through a tablet PC or a smart phone with a better display performance than the digital imaging device, there may be a user's demand to share an image captured by the digital imaging device with the tablet PC or the smart phone.

### SUMMARY

Various embodiments provide a method and device for transmitting and receiving information with improved accessibility between devices for information sharing.

Embodiments also provide a method and device for transmitting and receiving information with improved accessibility to information to share and any shared information.

According to an embodiment, a method of receiving information includes executing an external device link application on a device to be automatically connected to an external device, receiving summary information of information stored in the external device, displaying the received summary information, transmitting a request signal for at least one piece of information stored in the external device based on the displayed summary information to the external device, receiving information corresponding to the request signal from the external device, and storing the received information.

The executing of the external device link application on the device to be automatically connected to the external device may include searching for an access point set on the external device for connection, and connecting the access point to the device.

The method may further include displaying the received information and identification information about the external device after the storing of the received information is completed.

The method may further include displaying the summary information including information for identifying the received information among the information stored in the external device after the storing of the received information is completed.

The transmitting of the request signal for at least one piece of information stored in the external device based on the displayed summary information to the external device may include transmitting summary information selected based on the displayed summary information to the external device.

The method may further include receiving a reproduction request signal with respect to the received information and reproducing the received information, after the storing of the received information is completed.

The summary information may be based on at least one of metadata, thumbnail information, identification information, and database information of the information stored in the external device.

The external device may be a digital imaging device, the information stored in the external device may include a content acquired by the digital imaging device, and the summary information may be based on at least one of metadata, thumbnail information, identification information, and database information of the acquired information.

According to another embodiment, a method of transmitting information includes executing an external device link application on a device and setting an intrinsic access point, transmitting summary information of information stored in the device to an external device after the external device is linked to the set access point, and transmitting information corresponding to at least one information request signal received based on the summary information from the external device to the external device.

The transmitting of the summary information of information stored in the device to an external device after the external device is linked to the set access point may include displaying at least one of connection state information between the device and the external device and identification information about the connected external device, after the external device is connected to the device.

The transmitting of the summary information of information stored in the device to an external device after the external device is linked to the set access point may include receiving a connection request signal from the external device and displaying identification information about the external device and information for determining whether to approve connection of the external device, and approving the connection of the external device based on the information for determining whether to approve connection of the external device and transmitting the summary information to the external device.

The transmitting of the information corresponding to at least one information request signal received based on the summary information from the external device to the external device may include displaying information for determining whether to approve transmission of information according to the information request signal, and transmitting the information to the external device when the transmission of information is approved based on the information for determining whether to approve transmission of information.

The transmitting of the information corresponding to at least one information request signal received based on the summary information from the external device to the external device may include displaying information for determining whether to approve transmission of information according to the information request signal, and transmitting the information to the external device when the transmission of information is approved based on the information for determining whether to approve transmission of information.

The method may further include transmitting information corresponding to the received information request signal to the external device and displaying at least one of transmitted information and summary information of the transmitted information and identification information about the external device.

The external device may be a digital imaging device, the information stored in the external device may include a content acquired by the digital imaging device, and the summary information may include at least one of metadata, thumbnail information, identification information, and database information of the acquired information.

According to another embodiment, a device for receiving information includes a user interface unit that interacts with a user, a communication unit that communicates with at least one external device, and a processor that executes an external device link application, controls the communication unit to be automatically connected to the at least one external device, receives summary information about information stored in the connected external device, displays the received summary information via the user interface unit, and receives information selected based on the displayed summary information from the external device via the communication unit.

The processor may control the communication unit to be automatically connected to an access point set on the external device.

According to another embodiment, a device for transmitting information includes an information input unit that inputs information, an information output unit that outputs information, a storage unit that stores at least one piece of summary information and information corresponding to the at least one piece of summary information, a communication unit that communicates with at least one external device, and a processor that executes an external device link application, controls the communication unit to set an access point, transmits the summary information to the external device via the communication unit after the external device is linked to the set access point, and transmits information corresponding to at least one information request signal based on the summary information.

The processor may include at least one of a function of receiving a connection request signal from the external device and outputting information for determining whether to approve connection of the external device to the information output unit and a function of receiving the at least one information request signal based on the summary information and outputting information for determining whether to approve transmission of information according to the at least one information request signal to the information output unit.

The external device may be a digital imaging device, the information stored in the external device may include a content acquired by the digital imaging device, and the summary information may include at least one of metadata, thumbnail information, identification information, and database information of the acquired information.

In a non-transitory computer-readable recording medium having recorded thereon a program for executing the information receiving method according to the various embodiments, the information receiving method is executed as described above.

In a non-transitory computer-readable recording medium having recorded thereon a program for executing the information transmitting method according to the present invention, the information transmitting method is executed as described above.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view schematically illustrating a structure of a network system including an information transmitting device and an information receiving device, according to an embodiment;
FIG. 2 is a functional block diagram of the information receiving device of FIG. 1;
FIG. 3 is a functional block diagram of the processor of FIG. 2;
FIG. 4 is a functional block diagram of the information transmitting device of FIG. 1;
FIG. 5 is a flowchart for explaining a method of receiving information, according to an embodiment;
FIG. 6 is a flowchart for explaining a method of transmitting information, according to an embodiment;
FIG. 7 is a flowchart for explaining an operation between the information transmitting device and the information receiving device based on the flowcharts of FIGS. 5 and 6;
FIGS. 8A and 8B are examples of a screen displayed on an information receiving device when a method of receiving information is performed, according to an embodiment;
FIG. 9 is an example of a screen displayed on an information transmitting device when a method of transmitting information is performed, according to an embodiment;
FIGS. 10 to 12 are flowcharts based on the flowchart of FIG. 7 to which a function of an information receiving device is added;
FIG. 13 is a flowchart for explaining an operation between an information transmitting device and an information receiving device, according to another embodiment;
FIGS. 14 to 17 are flowcharts based on the flowchart of FIG. 7 to which a function of an information transmitting device is added or modified; and
FIG. 18 is an example of a screen displayed on an information transmitting device according to the flowcharts of FIGS. 14 to 17.

### DETAILED DESCRIPTION

The attached drawings for illustrating exemplary embodiments are referred to in order to gain a sufficient understanding of the invention, the merits thereof, and the objectives accomplished by the implementation of the invention. Hereinafter, various embodiments will be described in detail by explaining exemplary embodiments with reference to the attached drawings. Like reference numerals in the drawings denote like elements.

The terms such as "first" and "second" are used herein merely to describe a variety of constituent elements, but the constituent elements are not limited by the terms. The terms are used only for the purpose of distinguishing one constituent element from another constituent element.

The terms used in the present specification are used for explaining a specific exemplary embodiment, not limiting the present inventive concept. Thus, the expression of singularity in the present specification includes the expression of plurality unless clearly specified otherwise in context. Also, the terms such as "include" or "comprise" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof.

As used herein, expressions such as "at least one of," when preceding a list of elements, modify the entire list of elements and do not modify the individual elements of the list.

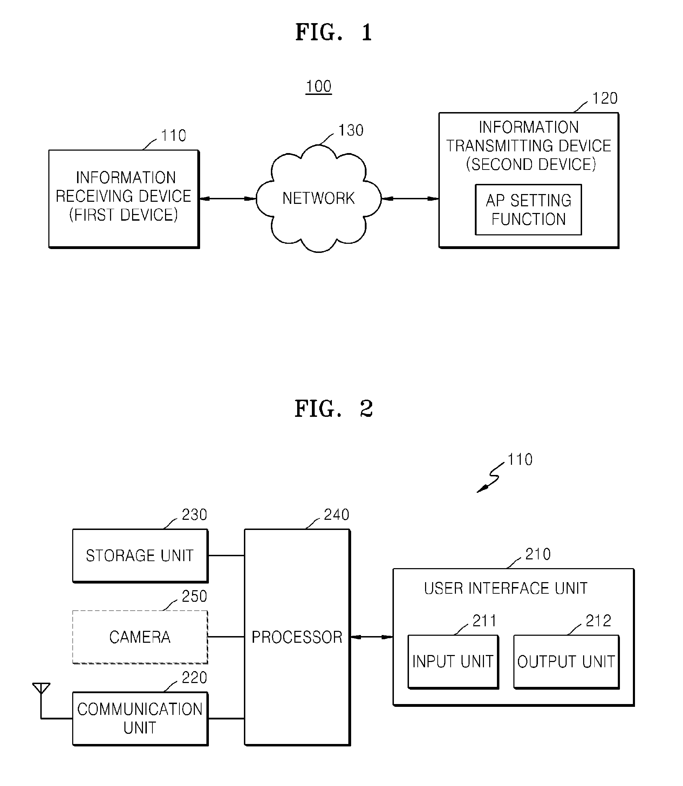

FIG. 1 is a view schematically illustrating a structure of a network system 100 including an information transmitting device 120 and an information receiving device 110, according to an embodiment of the. The terms "information transmitting device" and "information receiving device" are for explaining an embodiment in view of transmission of information to be shared and should not be understood as one being limited to an information transmitting device and an information receiving device. For example, the information receiving device may be referred to as a first device, whereas the information transmitting device may be referred to as a second device. Also, the information receiving device may be referred to as an external device to the information transmitting device, whereas the information transmitting device may be referred to as an external device to the information receiving device.

The network system 100 of FIG. 1 includes an information receiving device 110, an information transmitting device 120, and a network 130. The information receiving device 110 is capable of communicating through the network 130. The information receiving device 110 may include, for example, a smart phone, a smart TV, a personal computer (PC), a desktop PC, a notebook computer, a tabletop PC, a smart board, a tablet PC, a digital photo frame, a mobile device, and a personal digital assistant (PDA), but is not limited thereto.

In order to receive information according to the present embodiment, the information receiving device 110 executes an external device link application and is automatically linked to an access point (AP) set on the information transmitting device 120 via the network 130. The AP may be referred to as a virtual AP. When the information transmitting device 120 is a digital imaging device, the external device link application executed by the information receiving device 110 may be referred to as a digital imaging device link application or a camera link application. As such, the name of the external device link application may be differently set according to the type of the information transmitting device 120. The external device link application may be referred to as a link application.

The information receiving device 110 receives summary information of information stored in the information transmitting device 120 from the information transmitting device 120 via the network 130, and selects at least one piece of summary information based on received summary information. The information receiving device 110 transmits to the information transmitting device 120 a request signal about at least one piece of information among the information stored in the information transmitting device 120 by using the selected summary information. The information stored in the information transmitting device 120 may be referred to as content or a content file acquired by the information transmitting device 120.

Accordingly, the information receiving device 110 receives information to share from the information transmitting device 120. The information to be shared may be referred to as original data to summary information. The summary information may be based on at least one of metadata, thumbnail information, identification information, and database information of the information to be shared. The metadata may include, for example, information about the name of the original data, information about a time and place (or position) for acquiring the original data, information about a person related to the original data, information about a category of the original data, information about reproduction conditions of the original data, and information about a particular image, for example, an icon, for identifying the original data. The database information includes information defined in a form of classification of information similar to the information included in the metadata according to a preset standard. The information to be shared may be referred to as an information file to be shared.

The information transmitting device 120 includes a device such as a digital imaging device having functions to acquire captured image information, set an intrinsic wireless AP, and execute an external device link application according to the present embodiment, a device in which a portion of an imaging module is greater than that of any other modules of the information transmitting device 120, a portable device such as a camcorder, and a device having a function to set an intrinsic wireless AP, but is not limited thereto.

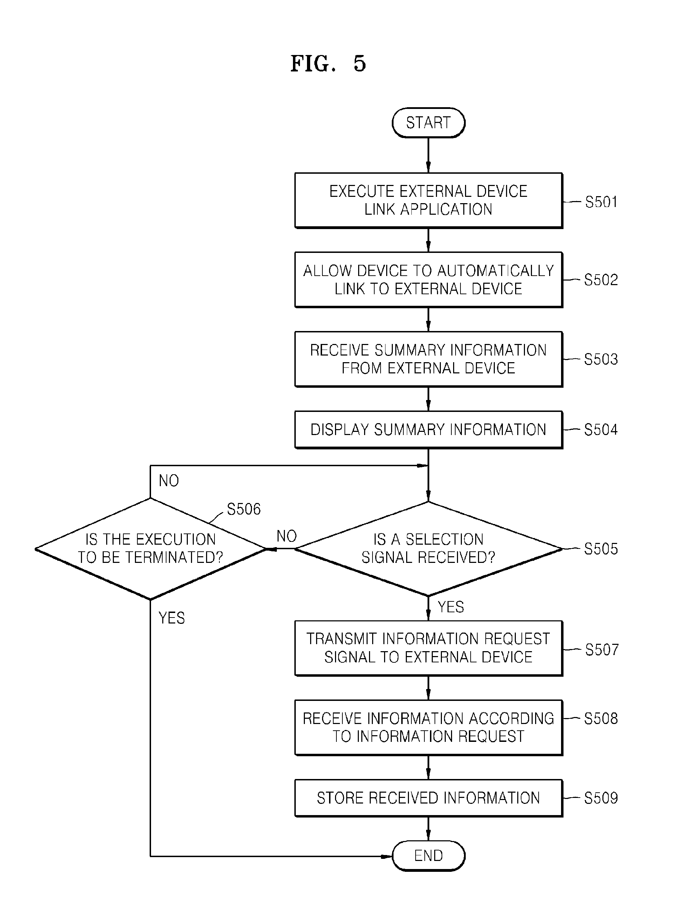

Setting a wireless AP on the information transmitting device 120 may be referred to as execution of a wireless AP or generation of a wireless AP. An example of setting a wireless AP is described in detail with reference to FIG. 5. When the information receiving device 110 is a smart phone, the external device link application executed by the information transmitting device 120 may be referred to as a smart phone link application. As such, the name of the external device link application executed by the information transmitting device 120 may be set according to the type of the information receiving device 110.

When the information transmitting device 120 executes an external device link application sooner than the information receiving device 110, the information transmitting device 120 may maintain a standby state until the information receiving device 110 executes the external device link application. When the information receiving device 110 executes an external device link application sooner than the information transmitting device 120, the information receiving device 110 continuously searches for an AP until an intrinsic wireless AP is set after an external device link application of the information transmitting device 120 is executed. After the information transmitting device 120 sets an AP, the information receiving device 110 is automatically linked to the AP of the information transmitting device 120.

To this end, the external device link application executed by each of the information receiving device 110 and the information transmitting device 120 is created such that the information receiving device 110 may be automatically linked to the AP without input of service set identifier (SSID) information of the AP set on the information transmitting device 120, communication channel information, and certification information for connection (or password information). The network 130 includes a network capable of performing short-range wireless communications such as wireless fidelity (Wi-Fi) based on an AP.

FIG. 2 is a functional block diagram of the information receiving device 110 of FIG. 1. Referring to FIG. 2, the information receiving device 110 includes a user interface unit 210, a communication unit 220, a storage unit 230, and a processor 240. The camera 250 is indicated by a dashed line because it may be included or not according to the type of the information receiving device 110.

The user interface unit 210 includes an input unit 211 for inputting an input signal and an output unit 212 for outputting an output signal. The input unit 211 and the output unit 212 may be provided as independent elements. A user may input information, commands, or data by using the input unit 211. According to the present embodiment, the data, information, or commands that may be input by using the input unit 211 may include, for example, an execution command of an external device link application, a selection signal about summary information that is displayed on the output unit 212, and a reproduction request signal of share information, but are not limited thereto.

A signal that is transmitted or input from the input unit 211 to the processor 240 may be input information, an input command, an input signal, or input data. The input unit 211 may be configured based on a touch interface of a touch panel or a touch screen. When the input unit 211 is configured based on a touch interface, the input unit 211 and the output unit 212 may be configured in a combined structure.

The output unit 212 may include a liquid crystal display, a thin film transistor-liquid crystal display, an organic light-emitting diode display, a flexible display, a 3D display, and an active-matrix organic light-emitting diode (AMO LED) display, but is not limited thereto. Thus, the output unit 212 includes a display unit.

The communication unit 220 is configured to transmit/receive a message or data via the network 130 and perform an operation of connecting an AP set on the information transmitting device 120. When the network 130 is a short-range communication network such as an AP-based Wi-Fi, as described above, the communication unit 220 is configured to transmit/receive a message or data based on an AP-based short-range communication network. The communication unit 220 may further include a communication function based on Bluetooth, radio frequency identification (RFID), and personal area network (PAN) including Zigbee.

The storage unit 230 may store programs and resources of an external device link application for performing a method of receiving information according to the present embodiment. The resources may include SSID information of an AP, communication channel information, and certification information or password information for connecting to the AP. Also, the storage unit 230 stores shared information transmitted from the information transmitting device 120.

The processor 240 for controlling all functions of the information receiving device 110 may be referred to as a controller, a microprocessor, or a digital signal processor. The processor 240 may operate based on an external device link application for performing an information receiving method for sharing information according to the present embodiment. A program for executing the external device link application may be read from the storage unit 230 or downloaded from an application providing server (not shown) connected via the communication unit 220 for use.

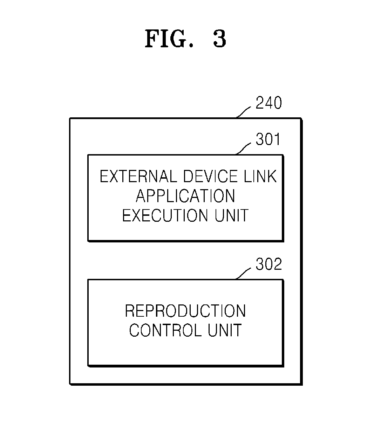

Thus, the processor 240 may include constituent elements shown in FIG. 3. FIG. 3 is a functional block diagram of the processor 240 of FIG. 2. Referring to FIG. 3, the processor 240 includes an external device link application execution unit 301 and a reproduction control unit 302.

The external device link application execution unit 301 is connected to the information transmitting device 120 and shares information stored in the information transmitting device 120 and selected by a user of the information receiving device 110, according to the present embodiment. The external device link application execution unit 301 is described in detail with reference to FIGS. 5 and 7-13.

The reproduction control unit 302 controls execution of an application to reproduce information according to a reproduction request signal regarding the shared information stored in the storage unit 230 and reproduction of the stored shared information. An application capable of reproducing information may be, for example, Gallery of Android phones. The reproduction control unit 302 for executing an application to reproduce information may change or shift an operation mode of the information receiving device 110 from an external device link application execution mode to an application execution mode in which information may be reproduced. However, when the information receiving device 110 is able to multi-execute two applications, the reproduction control unit 302 may control reproduction of shared information by additionally executing an information reproduction application without changing or shifting the operation mode of the information receiving device 110.

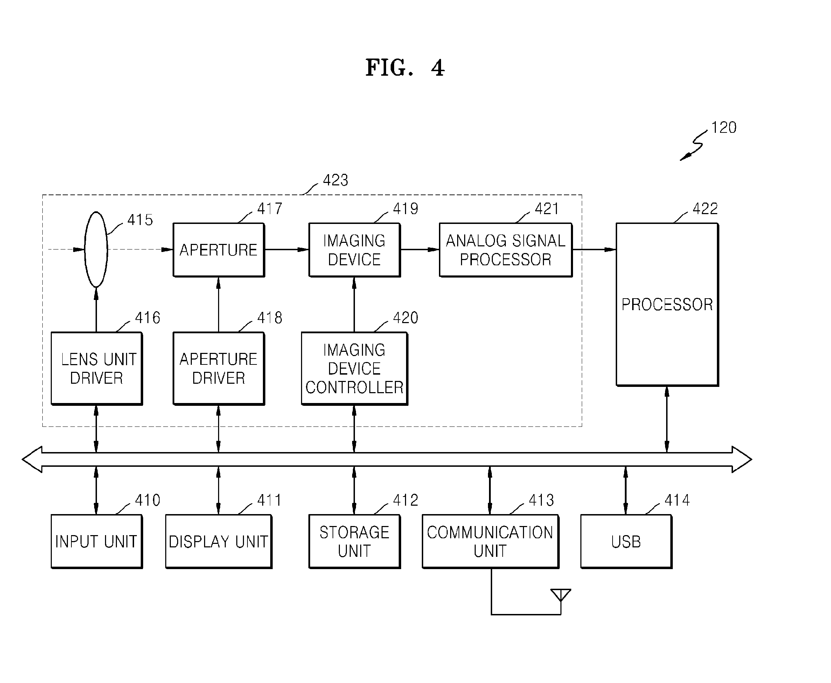

FIG. 4 is a functional block diagram of the information transmitting device 120 of FIG. 1, in which the information transmitting device 120 is a digital imaging device. Referring to FIG. 4, the information transmitting device 120 includes an input unit 410, a display unit 411, a storage unit 412, a communication unit 413, a universal serial bus (USB) 414, a lens unit 415, a lens unit driver 416, an aperture 417, an aperture driver 418, an imaging device 419, an imaging device controller 420, an analog signal processor 421, and a processor 422. The lens unit 415, the lens unit driver 416, the aperture 417, the aperture driver 418, the imaging device 419, the imaging device controller 420, and the analog signal processor 421 may be referred to as an imaging unit 423.

The input unit 410 is for a user to input a control signal and includes a variety of input portions such as a shutter release button for opening/closing the imaging device 419 to be exposed to light for a predetermined time period, a power button for supplying power, a wide-zoom button and a tele-zoom button for increasing or decreasing a viewing angle according to an input, and selection buttons for selecting a mode such as text input mode, a photography mode or a reproduction mode, a white balance setting function, an exposure setting function, etc. The input unit 410 may include various key buttons, and may be embodied in any form that enables a user to input a control signal, such as a keyboard, a touch pad, a touch screen, a remote controller, etc.

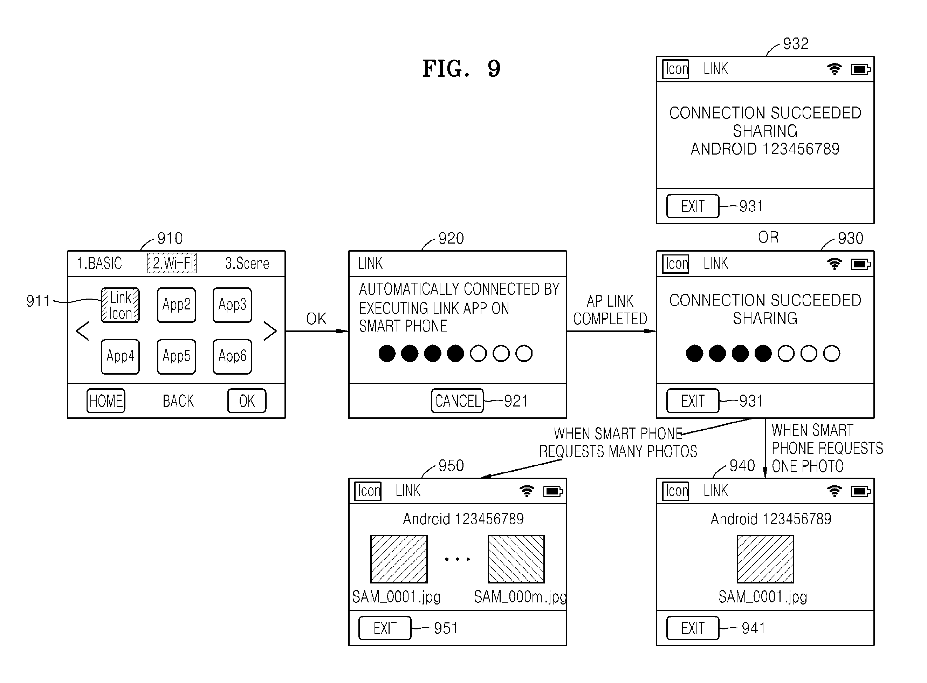

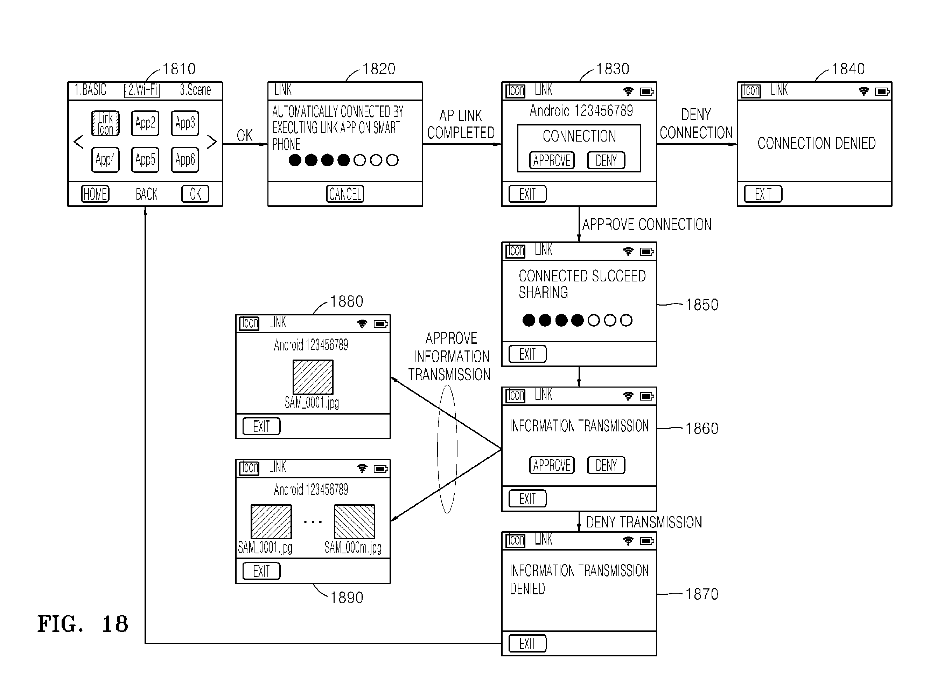

The display unit 411 is formed of a liquid crystal display (LCD), an organic luminescence display (OLED) panel, a field emission display (FED), etc., and may display information about a state of the information transmitting device 120, a captured image, or information to be described below with reference to FIGS. 9 and 18. The display unit 411 may be configured like the output unit 212 of the information receiving device 110. Thus, the display unit 411 may be referred to as an output unit. The input unit 410 and the display unit 411 of FIG. 4 may be configured like the user interface unit 210 of FIG. 2.

The storage unit 412 stores programs and resources or data that may execute a method according to an embodiment. A program may be stored in advance or downloaded from the application providing server (not shown) connected via the communication unit 413 as in the information receiving device 110. The program may include a program of an external device link application and the resources may include SSID information, communication channel information, and certification information (or password information) needed for setting an intrinsic AP.

The storage unit 412 may store a program of an operating system for operating the information transmitting device 120. The storage unit 412 may store various information needed for the program of an operating system, a captured image file, and a moving picture file. The image file and moving picture file stored in the storage unit 412 may be referred to as a contents file acquired by the information transmitting device 120 and included in the information stored in the information transmitting device 120 referred to in the embodiments. The storage unit 412 may store summary information of the stored information. The summary information is the same as that described above with reference to FIG. 1.

The communication unit 413 receives a control signal from the processor 422 and sets an intrinsic AP. An intrinsic AP may be set in a manner similar to setting a wires AP performed in a conventional smart phone. The SSID information, communication channel information, and certification information needed for setting an intrinsic AP may be read by the processor 422 from the storage unit 412 and then provided to the communication unit 413. The communication unit 413 may be configured to be able to transmit a message and data via the network 130 like the communication unit 220 of FIG. 2.

The USB 414 is a plug-and-play interface or a serial port that may connect the information transmitting device 120 and a peripheral device such as an audio player, a joystick, a keyboard, a telephone, a scanner, a printer, etc. The information transmitting device 120 may selectively include the USB 414.

The lens unit 415 focuses an optical signal. The lens unit 415 includes a zoom lens for controlling an increase or decrease of a viewing angle and a focus lens for focusing an object. The zoom lens and the focus lens each may be formed by a single lens or a group of a plurality of lenses. The aperture 112 adjusts the amount of incident light by controlling a degree of opening/closing.

The lens unit driver 416 and the aperture driver 418 receive a control signal from the processor 422 and respectively drive the lens unit 415 and the aperture 417. The lens unit driver 416 adjusts a focal distance by controlling the position of the lens unit 415 and performs operations of auto-focusing, zoom change, and focus change. The aperture driver 418 adjusts a degree of opening/closing of the aperture 417, in particular, an f-number or an aperture value, to perform an operation of auto-focus, auto-exposure correction, focus change, depth-of-field control, etc.

An optical signal passing through the lens unit 415 forms an image of an object at a light-receiving surface of the imaging device 419. The imaging device 419 may use a charge-coupled device (CCD), a complementary metal-oxide semiconductor image sensor (CIS), or a high-speed image sensor for converting an optical signal to an electric signal. A sensitivity of the imaging device 419 may be controlled by the imaging device controller 420. The imaging device controller 420 may control the imaging device 419 according to a control signal automatically generated by an image signal input in real time or a control signal manually input by a user's manipulation. An exposure time of the imaging device 419 is controlled by a shutter (not shown). The shutter includes a mechanically controlled shutter for controlling incidence of light by the movement of a shutter curtain including a front curtain and a rear curtain and an electronically controlled shutter for controlling exposure by supplying an electric signal to the imaging device 419.

The analog signal processor 421 performs noise reduction processing, gain adjustment, waveform shaping, analog-to-digital conversion, etc. on an analog signal supplied by the imaging device 419.

The processor 422 may reduce noise with respect to input image data and perform image signal processing for improvement of image quality such as gamma correction, color filter array interpolation, color matrix, color correction, color enhancement, etc. Also, the processor 422 may generate an image file by compressing image data generated by performing the image signal processing for improvement of image quality, and may restore the image data from the image file. A compression type of an image includes a non-lossy type or a lossy type. Compressed data may be stored in the storage unit 412. Further, the processor 422 may functionally perform color processing, blur processing, edge enhancement processing, image analysis processing, image recognition processing, image effect processing, etc. The image recognition processing may be used for face recognition, scene recognition processing, etc. Also, the processor 422 may generate a control signal for controlling auto-focusing, zoom change, focus change, auto-exposure correction, etc. by executing a program stored in the storage unit 412 or using a separate module, providing a generated control signal to the lens unit driver 416, the aperture driver 418, and the imaging device controller 420, and control overall operation of the constituent elements of the information transmitting device 120 such as a shutter or a flash.

The processor 422 according to the present embodiment controls the communication unit 413 to set or generate an intrinsic AP by executing an external device link application. After an external device such as the information receiving device 110 is linked to the AP, the processor 422 transmits summary information of the information stored in the storage unit 412 to the information receiving device 110. The processor 422 receives at least one information request signal based on the summary information from the information receiving device 110, searches for information to be transmitted from the information stored in the storage unit 412 by using received information, and transmits found information to the information receiving device 110 via the communication unit 413. While executing the external device link application according to the present embodiment, the processor 422 may display the information on the display unit 411 as illustrated in FIGS. 9 and 18.

FIG. 5 is a flowchart for explaining a method of receiving information, according to an embodiment. The processor 240 of FIG. 2 may operate according to the flowchart of FIG. 5.

Referring to FIG. 5, the processor 240 executes an external device link application according to a user's request (S501) and automatically connects the information receiving device 110 to the information transmitting device 120 without requesting the user to input information (S502). The linkage to the information transmitting device 120 may be interpreted to be linked to an AP set on the information transmitting device 120. In order to be automatically linked to the AP set on the information transmitting device 120, the external device link application executed by the information transmitting device 120 is created to include information needed for linking to the AP set on the information transmitting device 120. The necessary information includes the SSID information of an AP, communication channel information, and certification information or password information. That is, if the SSID information, communication channel information, and certification information or password information of an AP set on the information transmitting device 120 and the SSID information, communication channel information, and certification information or password information of an AP provided by the external device link application match with each other, the information receiving device 110 is connected to the information transmitting device 120.

If the information transmitting device 120 does not set an AP, the processor 240 continuously performs a process of searching for an AP until the information transmitting device 120 sets an AP. If the AP is set on the information transmitting device 120 and a link signal is received, the processor 240 automatically links the information receiving device 110 to the AP. In this case, if a link signal according to the setting of an AP is not received from the information transmitting device 120 until a predetermined time passes, the processor 240 may be configured to halt the execution of an external device link application. If the execution of an external device link application is halted, the processor 240 may output a relevant message via the output unit 212. The preset time information may be included in the resources stored in the storage unit 230.

The processor 240 automatically connects the information receiving device 110 to the information transmitting device 120 and receives summary information of the information stored in the information transmitting device 120 from the information transmitting device 120 (S503). The processor 240 displays received summary information on the output unit 212 (S504). The processor 240 receives a selection signal about information to be shared based on the summary information displayed on the output unit 212. The processor 240 transmits at least one information request signal to the information transmitting device 120 that is an external device (S507) by using summary information selected according to a received selection signal (S505). The selected summary information may be transmitted as the information request signal.

The processor 240 receives information according to the information request and stores received information in the storage unit 230 (S508 and S509). The received information may be referred to as the original data of the summary information as described above. The storing of the received information in the storage unit 230 may be copying.

If the selection signal based on the displayed summary information is not received in the operation S505, the processor 240 determines whether to terminate the execution of an external device link application (S506). If an operation termination command is input, the processor 240 terminates the execution of an external device link application. Otherwise, the processor 240 is returned to the operation S505 for determining whether the selection signal based on the displayed summary information is received.

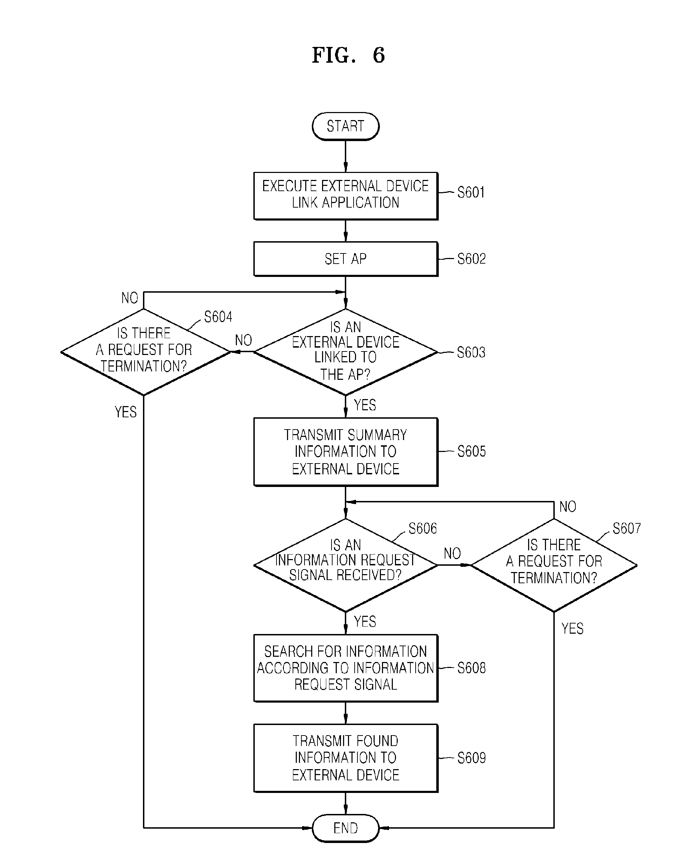

FIG. 6 is a flowchart for explaining a method of transmitting information, according to an embodiment. FIG. 6 is a flowchart showing an operation of the processor 422 of the information transmitting device 120 when the processor 240 of the information receiving device 110 operates as illustrated in the flowchart of FIG. 5.

Referring to FIG. 6, the processor 422 executes an external device link application on the information transmitting device 120 according to a request of a user using the information transmitting device 120 (S601). The processor 422 sets an intrinsic AP by controlling the communication unit 413 (S602). The intrinsic AP is set to include the SSID information, communication channel information, and certification information of an AP, which are previously set as in the setting of a wireless AP in a conventional smart phone.

After an external device is connected to the set AP (S603), the processor 422 transmits the summary information stored in the storage unit 412 to the information receiving device 110 that is the external device via the communication unit 413 (S605). The processor 422 receives at least one information request signal based on the transmitted summary information (S606) and searches for information according to the information request signal in the information stored in the storage unit 412 (S608). The searching for the information according to the information request signal may be referred to as selecting information according to the information request signal. The processor 422 transmits found information to the information receiving device 110 that is the external device via the communication unit 413 (S609).

If it is determined in operation S603 that the information receiving device 110 that is an external device is not linked to the AP, the processor 422 checks whether there is a request for terminating the execution of an external device link application (S604). When there is not such a request, the processor 422 maintains a standby state until the information receiving device 110 that is the external device is linked to the AP. The disconnection of the information receiving device 110 includes a case in which an external device link application is not executed in the information receiving device 110. When the external device is not linked to the AP for a predetermined set time, the execution of an external device link application may be set to be automatically terminated. To this end, information about the predetermined set time may be included in the resources stored in the storage unit 412. The processor 422 may output to the display unit 411 a message stating that the external device link application is terminated because no external device is linked to the AP.

Also, when no information request signal is received in the operation S606, the processor 422 checks whether there is a request for termination of the execution of an external device link application (S607). When there is no such a request, the processor 422 maintains a standby state until an information request signal is received. However, if it is determined that there is a request for termination of the execution of an external device link application, the processor 422 terminates the execution of an external device link application.

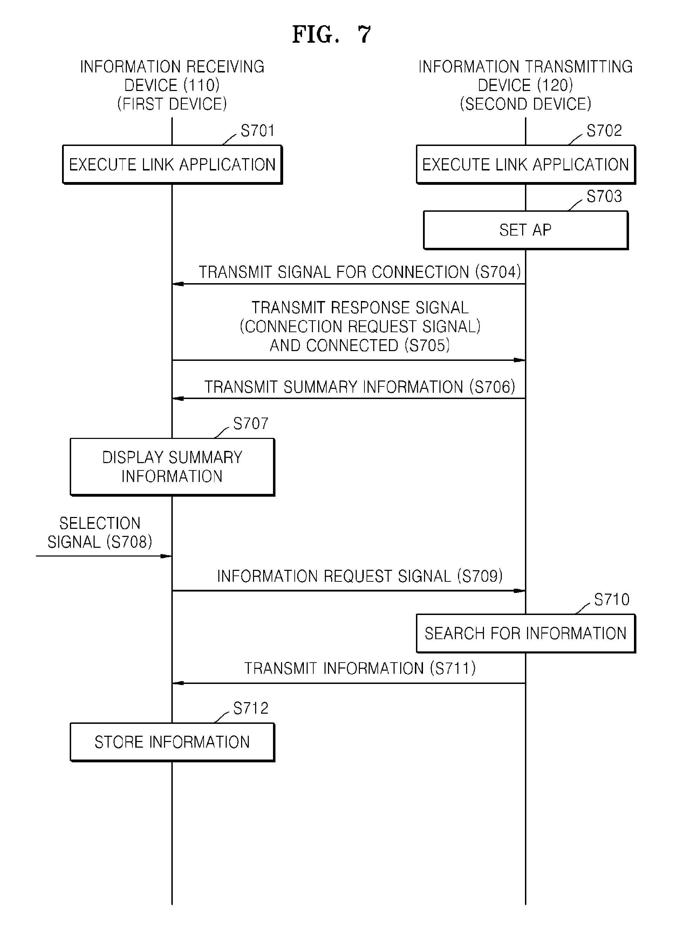

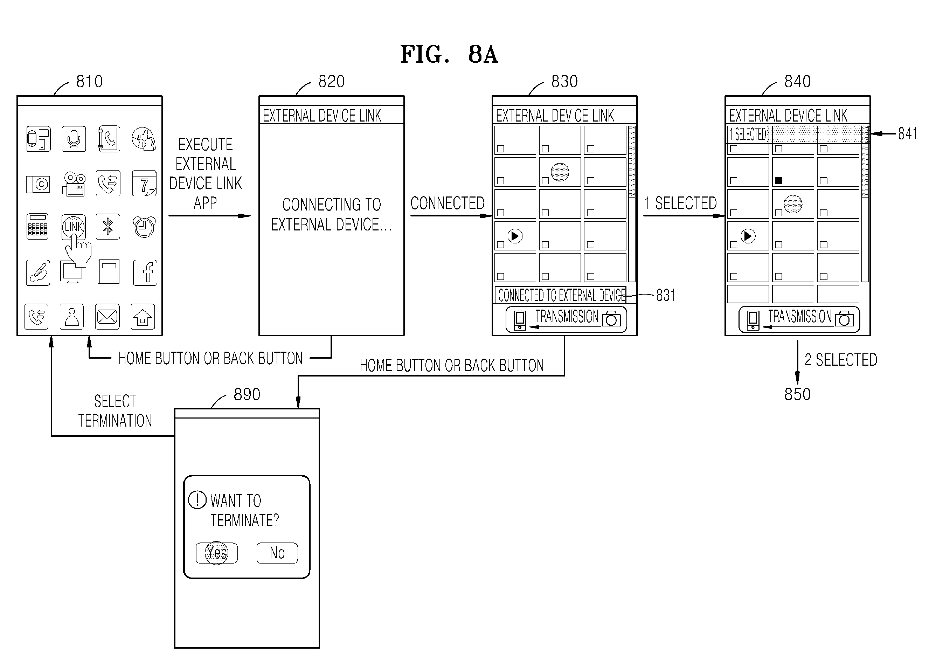

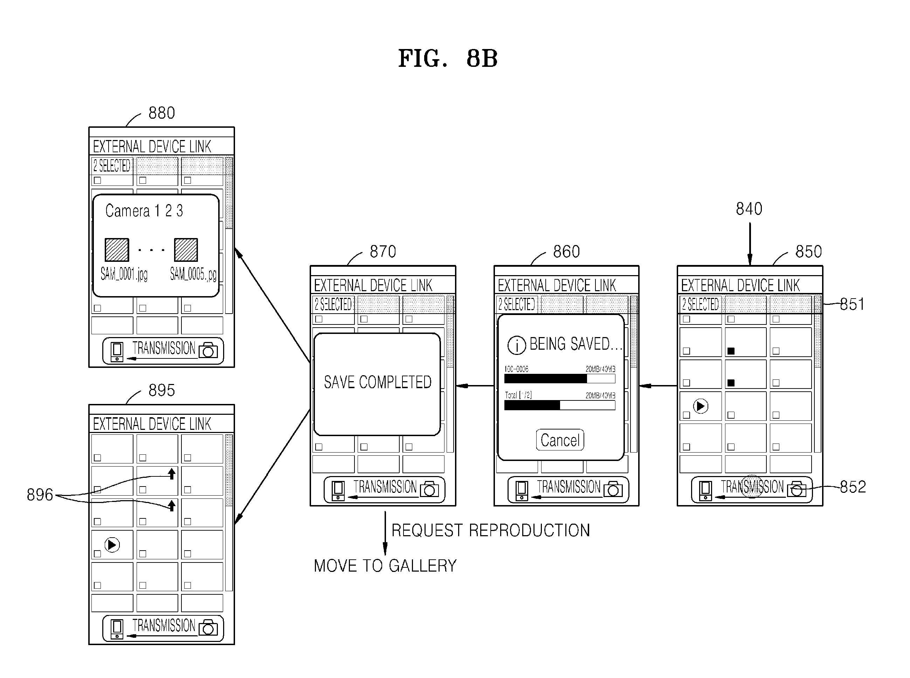

FIG. 7 is a flowchart for explaining an operation between the information receiving device 110 and the information transmitting device 120 based on the flowcharts of FIGS. 5 and 6. FIGS. 8A and 8B are examples of a screen displayed on the output unit 212 of the information receiving device 110 when a method of receiving information is performed, according to an embodiment. FIG. 9 is an example of a screen displayed on the output unit 411 of the information transmitting device 120 when a method of transmitting information is performed, according to an embodiment.

The operations between the information receiving device 110 and the information transmitting device 120 illustrated in FIG. 7 will now be described with reference to FIGS. 8A, 8B, and 9.

A home screen such as a screen 810 of FIG. 8A is displayed on the output unit 212 of the information receiving device 110. The processor 240 outputs a message "Connecting to an external device" such as a screen 820 of FIG. 8A to the output unit 212 according to a user's request for executing an external device link application and executes the external device link application (S701). The home screen displayed on the output unit 212 of the information receiving device 110 is not limited to the screen 810 of FIG. 8A.

After a menu screen such as a screen 910 of FIG. 9 is displayed on the display unit 411 of the information transmitting device 120, the processor 422 receives the user's request for executing an external device link application and accordingly executes the external device link application (S702) and sets an intrinsic AP as in the operation S602 of FIG. 6 (S703). In the information transmitting device 120, when a link icon 911 is selected on the screen 910, it is determined that executing an external device link application is requested.

When the intrinsic AP is set on the information transmitting device 120, the processor 422 outputs a signal for connection between the AP and the information receiving device 110 via the communication unit 413 (S704). The output signal may be broadcasted. The processor 422 may output information about a current operation state of the information transmitting device 120 by using a message such as a screen 920 of FIG. 9 to the display unit 411 of the information transmitting device 120.

Since the information receiving device 110 is executing the external device link application, after the signal for connection is received from the information transmitting device 120, the information receiving device 110 transmits a response signal thereto to the information transmitting device 120 and thus the information receiving device 110 is connected to the information transmitting device 120 (S705). Accordingly, a screen of the display unit 411 of the information transmitting device 120 is changed to a screen 930 of FIG. 9 displaying that connection has succeeded and information sharing is available, or a screen 932 of FIG. 9 displaying that connection has succeeded and information sharing is available, with information of a currently connected device.

After being successfully connected to the information receiving device 110, the information transmitting device 120 transmits the summary information stored in the storage unit 412 to the information receiving device 110 (S706). Accordingly, a screen 830 of FIG. 8A is displayed on the output unit 212 of the information receiving device 110 (S707). The screen 830 of FIG. 8A is an example that the summary information is displayed as thumbnail information. A message indicating the connection to an external device may be output in an area 831 of FIG. 8A.

The processor 240 may receive a signal for selecting information to be shared based on the summary information displayed like the screen 830 of FIG. 8A (S708) and display information about a selected state on a summary information screen displayed on the output unit 212.

In other words, information about the number of selections is displayed in an area 841 like a screen 840 of FIG. 8A, and selected summary information is marked. When a next additional selection signal is input, information about the number of changed selections is displayed in an area 851 like a screen 850 of FIG. 8B, and selected summary information is marked. After selection is completed and a menu item 852 for requesting transmission is controlled, the processor 240 transmits a signal requesting information corresponding to the selected summary information to the information transmitting device 120 by using the selected summary information (S709).

Accordingly, the processor 422 of the information transmitting device 120 searches for information corresponding to the received information request signal from the storage unit 412 (S710). When the corresponding information is found, the processor 422 transmits the found information to the information receiving device 110 via the communication unit 413 (S711). The information receiving device 110 stores received information in the storage unit 230 (S712). Information such as a screen 860 of FIG. 8B is displayed on the output unit 212 of the information receiving device 110, thereby indicating a current receiving state. When the storing of the received information is completed, a screen 870 of FIG. 8B is displayed on the output unit 212 so that a user may recognize that the storing is completed.

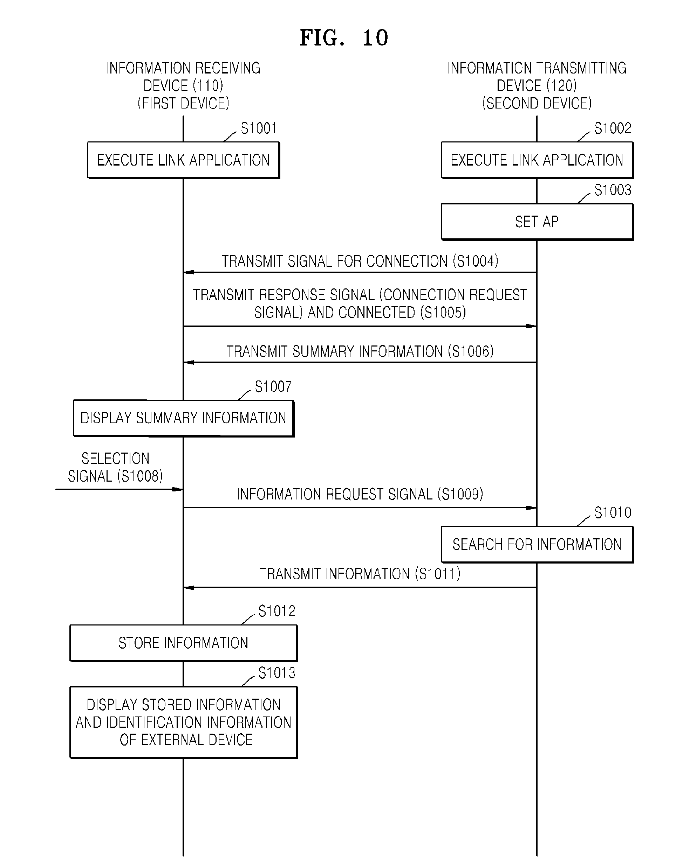

FIGS. 10 to 12 are flowcharts based on the flowchart of FIG. 7 to which a function of the information receiving device 110 is added. In other words, FIG. 10 illustrates an embodiment in which a function of displaying the stored information and identification information about the information transmitting device 120 is added to the flowchart of FIG. 7 after shared information is stored. Thus, since the operations S1001 through S1012 of FIG. 10 are the same as the operations S701 through S712 of FIG. 7, descriptions thereof are omitted herein.

After storing of the received shared information is completed, the information receiving device 110 displays the information stored in the operation S1013 and identification information about the information transmitting device 120 on the output unit 212 like a screen 880 of FIG. 8B. Accordingly, the user may easily recognize the shared information and information about a device that shares information.

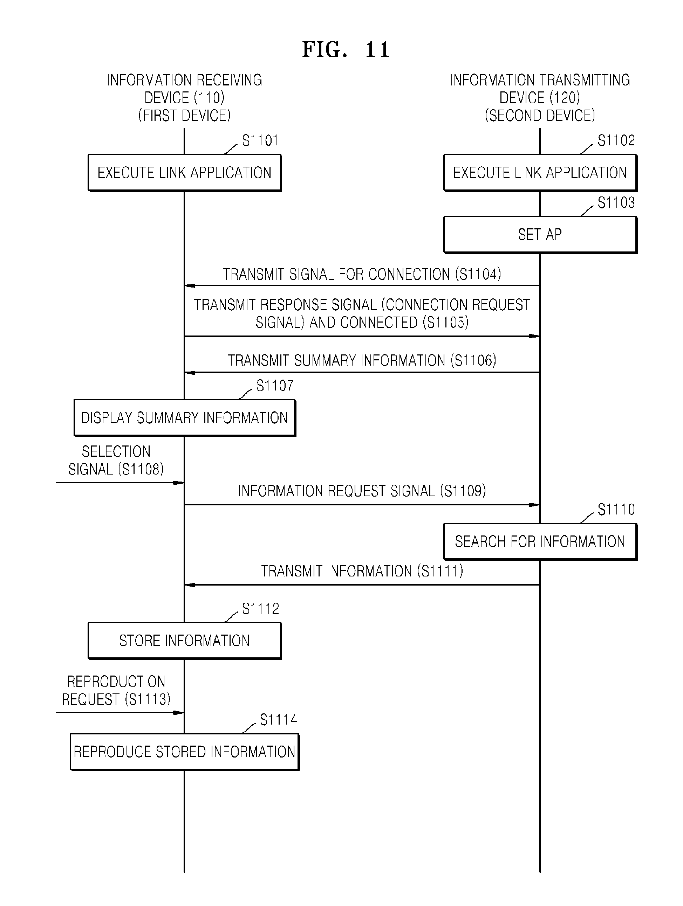

FIG. 11 illustrates an embodiment in which a function of reproducing the stored shared information as a reproduction request is received is added to the flowchart of FIG. 7 after the storing of the received information is completed in the information receiving device 110. Thus, since the operations S1101 through S1112 of FIG. 11 are the same as the operations S701 through S712 of FIG. 7, descriptions thereof are omitted herein.

After the storing of the received shared information is completed in the information receiving device 110, the processor 240 receives a reproduction request (S1113) and reproduces the shared information stored in the storage unit 230 (S1114). The shared information stored in the storage unit 230 may be reproduced by being moved to an application capable of reproducing the shared information as shown in the screen 870 of FIG. 8B or by additionally executing an application capable of reproducing shared information when the information receiving device 110 is capable of multitasking as described above. When the information receiving device 110 is capable of multitasking, information to share may be selected while the shared information stored in the storage unit 230 is being reproduced. In this case, the processor 240 may be provided in a divided form of a screen for reproducing shared information and a screen for selecting information to share.

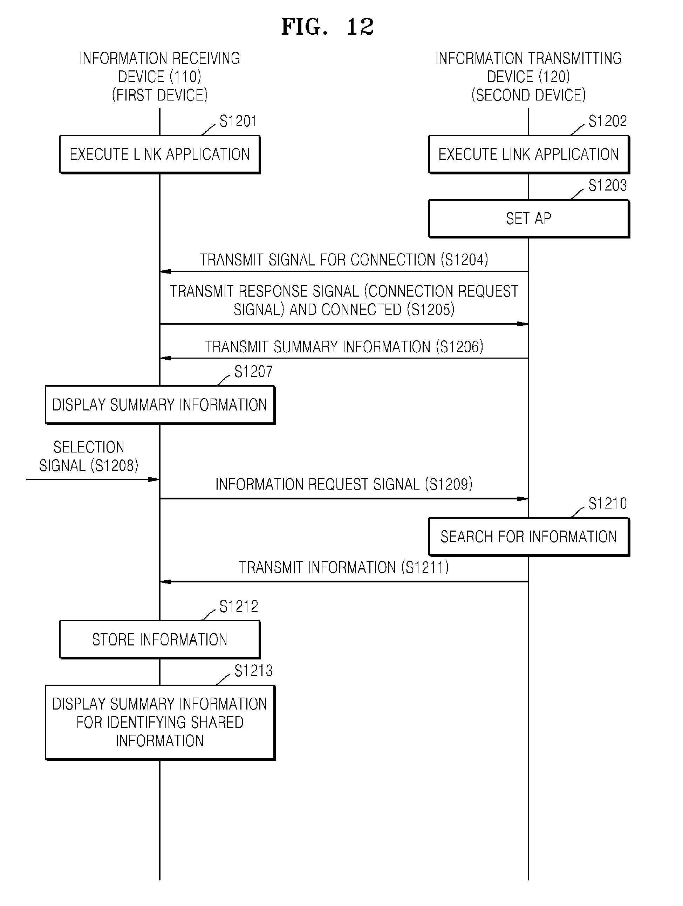

FIG. 12 illustrates an embodiment in which a function of displaying the summary information including information for identifying the information stored in the information transmitting device 120 is added to the flowchart of FIG. 7 after the storing of the received information is completed in the information receiving device 110. Thus, since the operations S1201 through S1212 of FIG. 12 are the same as the operations S701 through S712 of FIG. 7, descriptions thereof are omitted herein.

After the storing of the received shared information is completed in the information receiving device 110, the processor 240 displays the stored shared information and summary information for identifying information stored in the information transmitting device 120 but not shared, in the operation S1213. The displayed summary information screen may be displayed like a screen 895 of FIG. 8B. In the screen 895 of FIG. 8B, information being shared is marked by an arrow 896 and information not being shared is unmarked so that the user may easily recognize shared information and unshared information among the information stored in the information transmitting device 120. Marking information for identifying the shared information is not limited to the screen 895 of FIG. 8B, but may be done in other forms.

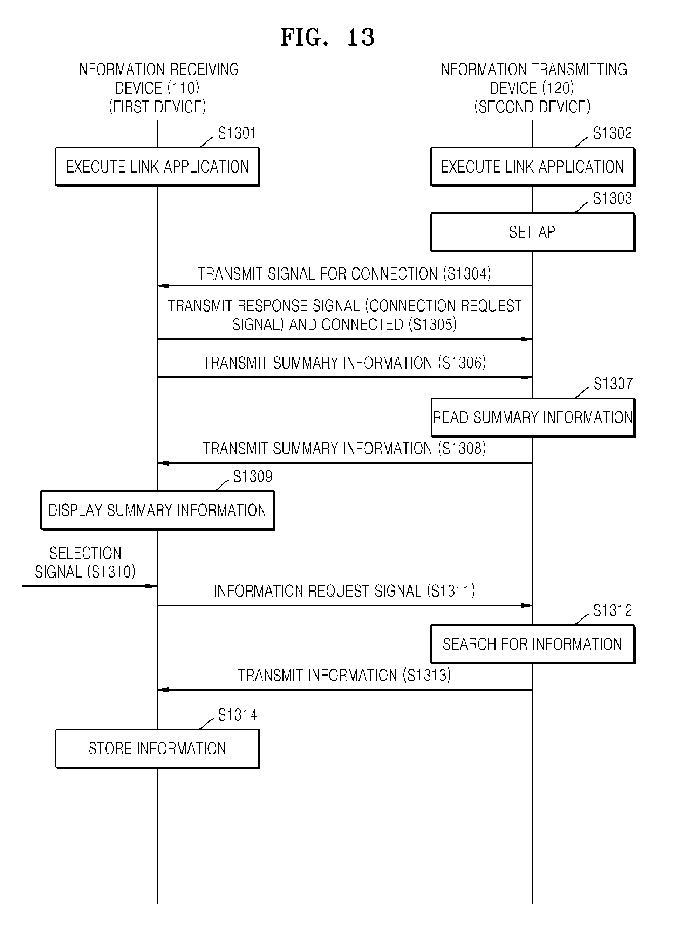

FIG. 13 illustrates an embodiment in which a function of transmitting summary information from the information transmitting device 120 to the information receiving device 110 according to a request for the summary information by the information receiving device 110 is added to the flowchart of FIG. 7 after the information receiving device 110 is connected to the information transmitting device 120. Thus, since the operations S1301 through S1305 and S1307 through S1314 of FIG. 13 are the same as the operations S701 through S712 of FIG. 7, descriptions thereof are omitted herein.

After the information receiving device 110 is connected to the information transmitting device 120, the information transmitting device 120 receives a request for summary information from the information receiving device 110 in the operation S1306 of FIG. 13, reads the summary information stored in the storage unit 412, and transmits the summary information to the information receiving device 110 via the communication unit 413 in the operations S1307 and S1308.

In FIG. 8A, when a home button or a back button is controlled on the screen 820, the processor 240 halts the execution of the external device link application and returns the screen to the home screen 810. Also, when a home button or a back button is controlled on the screen 830, the processor 240 displays a screen 890 asking whether to terminate the execution of the external device link application. When a signal for termination is received, the screen is returned to the home screen 810. However, when a home button or a back button is controlled on the screens 840, 850, 860, 870, 880, and 895, the processor 240 may return the screen to the home screen 810 directly or via the screen 890 asking whether to terminate the execution of the external device link application.

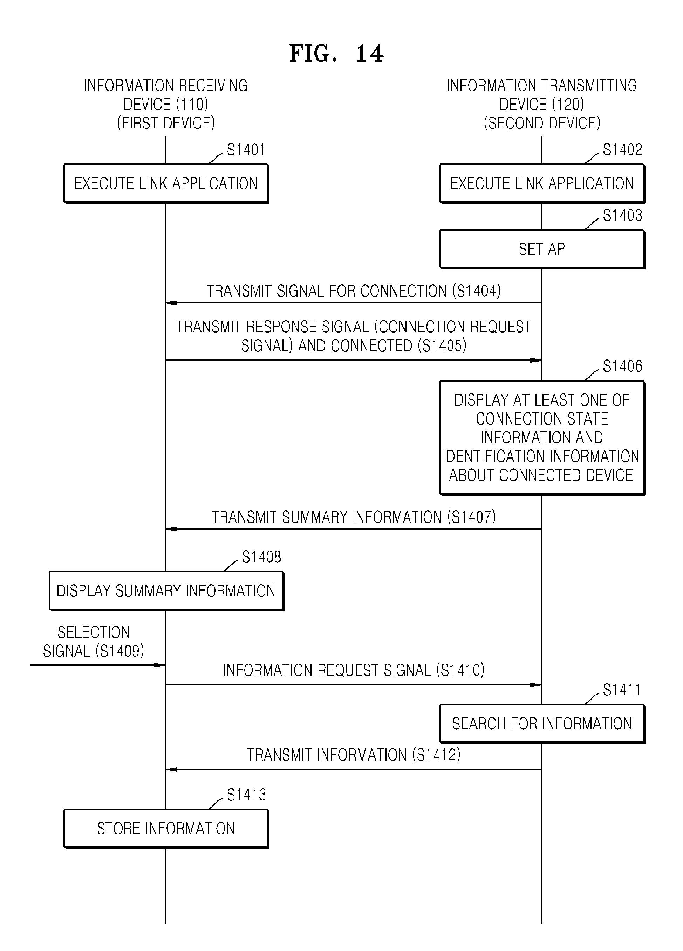

FIGS. 14 to 17 are flowcharts based on the flowchart of FIG. 7 to which a function of the information transmitting device 120 is added or modified. FIG. 14 illustrates an embodiment in which a function of displaying at least one of the connection state information and the identification information about the connected device on the display unit 411 of the information transmitting device 120 in an operation S1406 is added to the flowchart of FIG. 7 after the information receiving device 110 is connected to the information transmitting device 120. In other words, a connection state screen like the screen 930 or 932 of FIG. 9 may be displayed or only information for identifying a connected external device such as the information receiving device 110 that is not shown in FIG. 9 may be displayed. Since the operations S1401 through S1405 and S1407 through S1413 of FIG. 14 are the same as the operations S701 through S712 of FIG. 7, descriptions thereof are omitted herein.

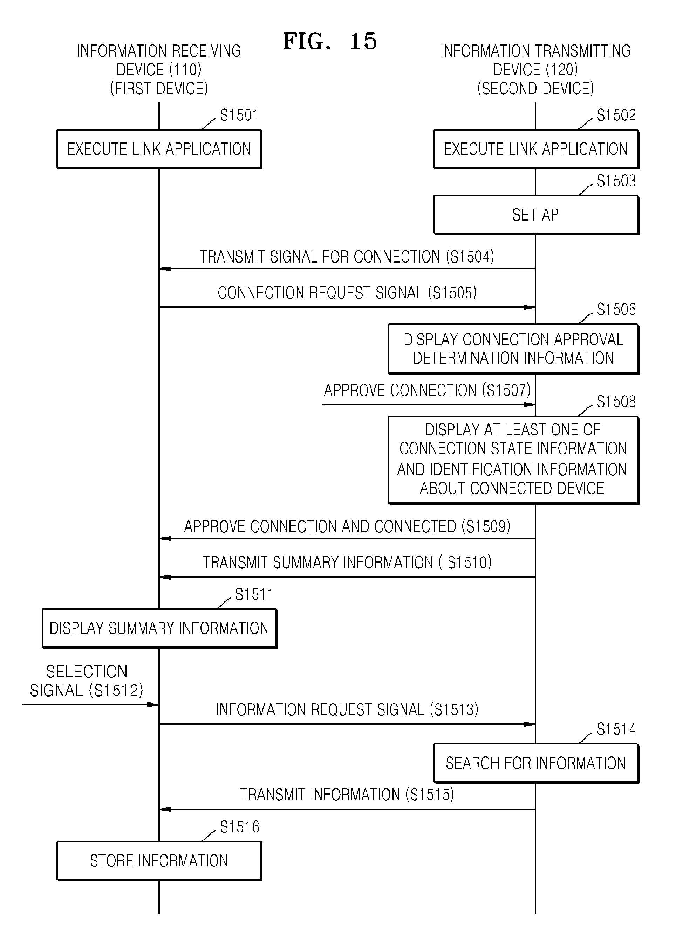

FIG. 15 illustrates an embodiment in which a function of displaying connection approval determination information (S1506), receiving information for approving connection based on the displayed information through the input unit 410 (S1507), and displaying the connection state information and the identification information about a connected device (S1508), when a request for connection is made, is added to the flowchart of FIG. 14 showing the operation of the information transmitting device 120. Since the operations S1501 through S1505 and S1510 through S1516 of FIG. 15 are the same as the operations S701 through S712 of FIG. 7, descriptions thereof are omitted herein.

FIG. 18 illustrates examples of screens displayed on the display unit 411 of the information transmitting unit 120 according to the flowcharts of FIGS. 14 through 17. In the operation S1506 of FIG. 15, information for determining whether to approve connection is displayed while displaying information about a connected external device such as the information receiving device 110 on the display unit 411, as illustrated in a screen 1830 of FIG. 18.

After receiving a command for approving connection via the input unit 410 based on the displayed information for determining whether to approval connection (S1507), the processor 422 displays a screen 1850 on the display unit 411 (S1508). However, if a command to deny the connection approval is received, the processor 422 displays a screen 1840 of FIG. 18 on the display unit 411.

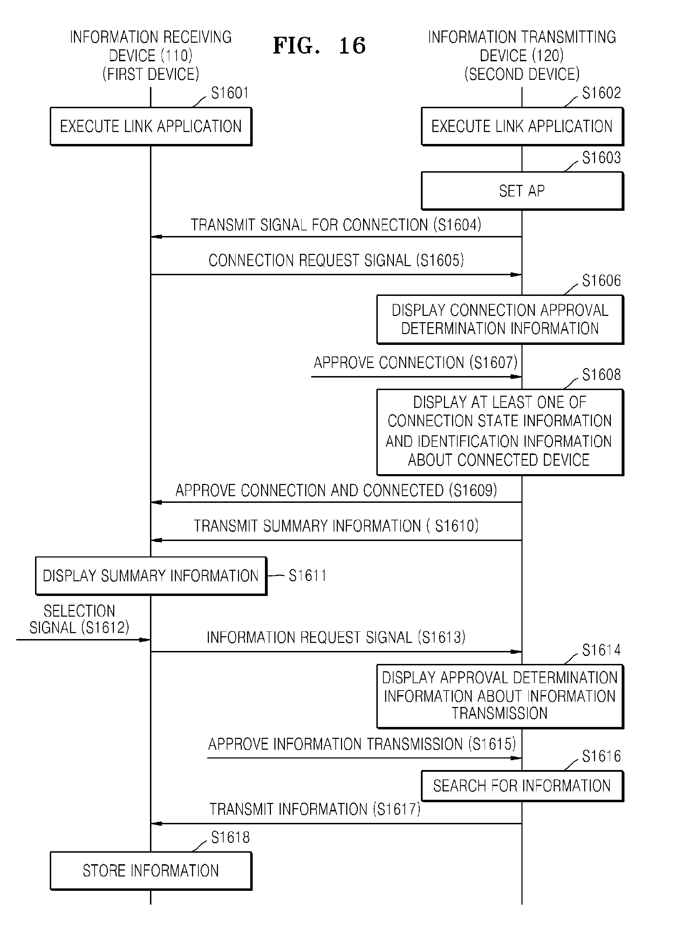

FIG. 16 illustrates an embodiment in which a function of determining whether to approve when selected information is transmitted is added to the flowchart of FIG. 15 showing the operation of the information transmitting device 120. In other words, information about determining whether to approve transmission of information is displayed on the display unit 411 in an operation S1614. That is, the processor 422 displays the information about determining whether to approve transmission of information like a screen 1860 of FIG. 18. After receiving a command for approving transmission of information (S1615), the processor 422 may normally transmit information and display a screen such as a screen 1850 of FIG. 18 on the display unit 411. However, after receiving a command to deny the transmission of information, the processor 422 may display a screen such as a screen 1870 of FIG. 18 on the display unit 411. Since the operations of S1601 through S1613 and S1616 through S1618 are the same as the operations S1501 through S1516, descriptions thereof are omitted herein.

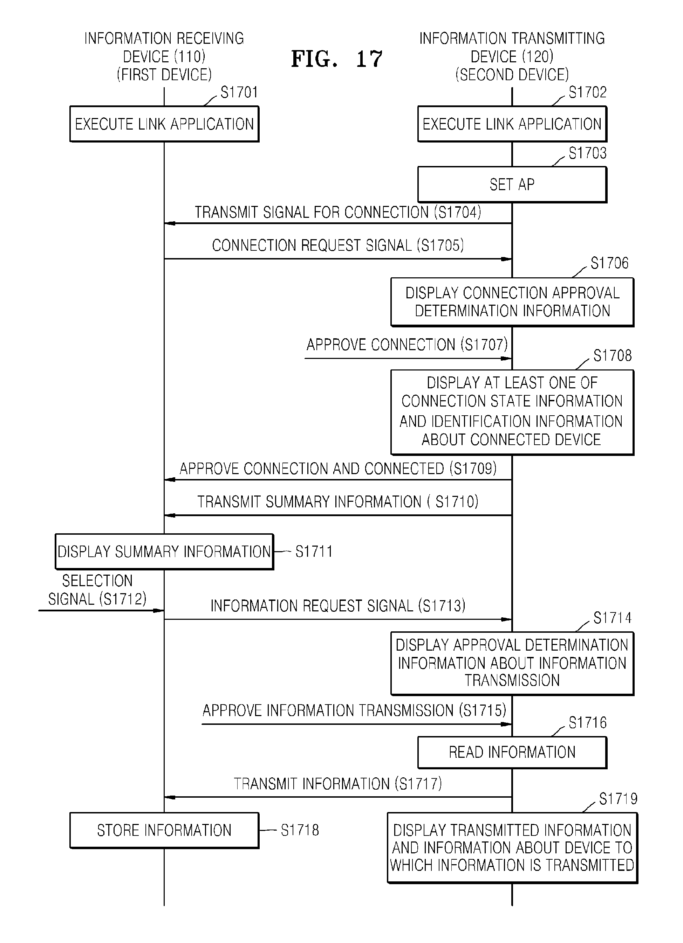

FIG. 17 illustrates an embodiment in which a function of outputting the shared information and the information about the information receiving device 110 sharing information is added to the flowchart of FIG. 16 showing the operation of the information transmitting device 120. In other words, after reading the information (S1716) and completing the transmission of information (S1717), the processor 411 displays the transmitted information and the information about a device to which the information is transmitted (S1719) like screens 1880 and 1890 of FIG. 18 by controlling the display unit 411 in the operation S1719 of FIG. 17. The screens 940 and 950 of FIG. 9 are the same as the screens 1880 and 1890 of FIG. 18, respectively. In FIG. 9, an example of displaying the screens 940 and 950 according to the shared information after the transmission of the shared information is completed in FIG. 9. The screens 940 and 1880 show a case in which a smart phone "Android 123456789" that is the information receiving device 110 requests one photo. The screens 950 and 1890 show a case in which the smart phone "Android 123456789" that is the information receiving device 110 requests many photos. Since the operations of S1701 through S1615 and S1717 through S1718 are the same as the operations S1601 through S1615 and S1617 through S1618 respectively, descriptions thereof are omitted herein.

The above-described operations of the information receiving device 110 in the flowcharts of FIGS. 13 through 17 may be replaced by the operation of the information receiving device 110 in the flowcharts of FIGS. 10, 11, or 12. The above-described operations of the information transmitting device 120 in the flowcharts of FIGS. 7, and 10 through 13 may be replaced by the operation of the information transmitting device 120 in the flowcharts of FIGS. 14, 15, 16, or 17. Also, the operations according to the flowcharts of FIGS. 14 through 17 may be modified such that the information transmitting device 120 can transmit summary information to the information receiving device 110 after the information receiving device 110 requests the summary information as in FIG. 13. FIGS. 16 and 17 may be modified to exclude a technical feature related to a function of determining whether to approve connection.

As described above, in the method and device for transmitting and receiving information according to the embodiments, since a device for receiving information to share is automatically linked to an AP set in a device for transmitting the information to share, accessibility between devices for sharing information may be improved.

Also, since information selected based on summary information of information to share by an information receiving device is shared, the information receiving device may be prevented from receiving unnecessary information.

Also, since a device for transmitting and receiving information outputs identification information about shared information and a device sharing information and an information receiving device outputs identification information about shared information of sharable information, details of the shared information may be easily recognized.

The invention can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, etc. The computer-readable recording medium can also be distributed over network-coupled computer systems so that the computer-readable code is stored and executed in a distributed fashion.

Also, using the disclosure herein, programmers of ordinary skill in the art to which the invention pertains may easily implement functional programs, codes, and code segments for making and using the invention.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

While this invention has been particularly shown and described with reference to exemplary embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of receiving information, the method comprising:
executing an external device link application on a device to be automatically connected to an external device;
receiving summary information of information stored in the external device;
displaying the received summary information;
transmitting a request signal for at least one piece of information stored in the external device based on the displayed summary information to the external device;
receiving information corresponding to the request signal from the external device; and
storing the received information.

2. The method of claim 1, wherein the executing of the external device link application on the device to be automatically connected to the external device comprises:
searching for an access point set on the external device for connection; and
connecting the access point to the device.

3. The method of claim 1 or 2, further comprising:
displaying the received information and identification information about the external device, after the storing of the received information is completed.

4. The method of claim 1 or 2, further comprising:
displaying the summary information including information for identifying the received information among the information stored in the external device, after the storing of the received information is completed.

5. The method of claim 1 or 2, wherein the transmitting of the request signal for at least one piece of information stored in the external device based on the displayed summary information to the external device comprises:
transmitting summary information selected based on the displayed summary information to the external device.

6. The method of claim 1 or 2, further comprising:
receiving a reproduction request signal with respect to the received information and reproducing the received information, after the storing of the received information is completed.

7. The method of claim 1 or 2, wherein the summary information is based on at least one of metadata, thumbnail information, identification information, and database information of the information stored in the external device.

8. The method of claim 1 or 2, wherein the external device is a digital imaging device, the information stored in the external device comprises a content acquired by the digital imaging device, and the summary information is based on at least one of metadata, thumbnail information, identification information, and database information of the acquired information.

9. A method of transmitting information, the method comprising:
executing an external device link application on a device and setting an intrinsic access point;
transmitting summary information of information stored in the device to an external device after the external device is linked to the set access point; and
transmitting information corresponding to at least one information request signal received based on the summary information from the external device to the external device.

10. The method of claim 9, wherein the transmitting of the summary information of information stored in the device to an external device after the external device is linked to the set access point comprises:
displaying at least one of connection state information between the device and the external device and identification information about the connected external device, after the external device is connected to the device.

11. The method of claim 9 or 10, wherein the transmitting of the summary information of information stored in the device to an external device after the external device is linked to the set access point comprises:
receiving a connection request signal from the external device and displaying identification information about the external device and information for determining whether to approve connection of the external device; and
approving the connection of the external device based on the information for determining whether to approve connection of the external device and transmitting the summary information to the external device.

12. The method of claim 11, wherein the transmitting of the information corresponding to at least one information request signal received based on the summary information from the external device to the external device comprises:
displaying information for determining whether to approve transmission of information according to the information request signal; and
transmitting the information to the external device when the transmission of information is approved based on the information for determining whether to approve transmission of information.

13. The method of claim 9, wherein the transmitting of the information corresponding to at least one information request signal received based on the summary information from the external device to the external device comprises:
displaying information for determining whether to approve transmission of information according to the information request signal; and
transmitting the information to the external device when the transmission of information is approved based on the information for determining whether to approve transmission of information.

14. A device for receiving information comprising:
a user interface unit that interacts with a user;
a communication unit that communicates with at least one external device; and
a processor that executes an external device link application, controls the communication unit to be automatically connected to the at least one external device, receives summary information about information stored in the connected external device, displays the received summary information via the user interface unit, and receives information selected based on the displayed summary information from the external device via the communication unit.

15. A device for transmitting information comprising:
an information input unit that inputs information;
an information output unit that outputs information;
a storage unit that stores at least one piece of summary information and information corresponding to the at least one piece of summary information;
a communication unit that communicates with at least one external device; and
a processor that executes an external device link application, controls the communication unit to set an access point, transmits the summary information to the external device via the communication unit after the external device is linked to the set access point, and transmits information corresponding to at least one information request signal based on the summary information.
